# EUROPEAN PATENT APPLICATION

(11) **EP 2 720 406 A1**
(43) Date of publication of application: **16.04.2014**
(21) Application number: 12306237.4
(22) Date of filing: 10.10.2012
(51) Int. Cl.: H04L 12/24

(54) **Method for isolated anomaly detection in large-scale data processing systems**

(71) Applicant: Thomson Licensing, 92130 Issy-les-Moulineaux (FR); Inria Institut National de Recherche en Informatique et en Automatique, 78150 Le Chesnay (FR)
(72) Inventor: Le Merrer, Erwan, 35576 Cesson-Sévigné (FR); Straub, Gilles, 35576 Cesson-Sévigné (FR); Ludinard, Romaric, 35042 Rennes (FR); Sericola, Bruno, 35042 Rennes (FR)
(74) Representative: Perrot, Sébastien

(57) **Abstract**

The present invention is related to detection of isolated anomalies, and operates in an automatic manner, without resulting in overloading an anomaly management system in case of large-scale anomalies occurring and that does not rely on user intervention.

## Description

### 1. Field of invention.

The present invention generally relates to large-scale data processing systems, where many (e.g. thousands, millions) of devices process data to provide a data processing service. In particular, the technical field of the present invention is related to the detection of isolated anomalies in such large-scale data processing systems.

### 2. Technical background.

An example of a large-scale data processing system in the context of the invention, is a triple-play audio visual service providing system, where television, Internet, and telephony services are provided to millions of subscribers (here, the reception and rendering of an audiovisual service is the data processing). Another example of a large-scale data processing system is a (distributed-) data storage system, where thousands of storage nodes provide a storage service (here, the rendering of the storage service is the data processing). In order to detect anomalies in a Quality of Service (QoS) of the triple-play services enjoyed by the operators' millions of clients, or in order to detect anomalies in the functioning of storage devices in the distributed data storage system, centralized error detection servers that are part of an anomaly detection system monitor the data processing devices. Here, isolated anomaly detection is problematic. This is because the anomaly management system, due to the millions of data processing devices that are connected to it, must protect itself against overload that can occur when the system enables individual message transmission from the data processing devices to the anomaly management system. If for example a communication path went down for any reason, the thousands or millions of data processing devices that are served (for the triple-play example) or that intercommunicate (for the distributed data storage example) at least partly through this communication path, will experience a sudden decrease of QoS (Quality of Service) (for the triple-play example), or a sudden loss of connection (for the distributed storage example), and would massively send error messages to the anomaly management system. The anomaly management system would then not be able to cope with the mass of messages arriving in a very short time period. For these large-scale data processing systems, operators thus tend to limit the very possibility for individual devices to transmit error messages to the anomaly management system. Remote management techniques exist such as TR-069 or SNMP (Simple protocols. These protocols are server-client oriented, i.e. a server remotely manages many data processing devices. By essence this centralized remote management architecture does not scale to millions of data processing devices as a single server cannot efficiently monitor such a huge device set. According to prior art, a different monitoring architecture is thus put into place where the monitoring system frequently monitors some data processing devices in distribution paths of the service distribution network topology, to verify if these data processing devices continue to function correctly. Evidently, this protection barrier against overloading the anomaly management system makes any fine grain anomaly detection impossible. Then, anomaly detection on an individual basis has become impossible.

When an anomaly occurs, the anomaly may either be due to a network related issue, in which case a significant number of data processing devices will experience the same anomaly, or be due to a local problem, and only impacting a single data processing device or a very limited number of data processing devices. Taking the first example of the large-scale data processing system being a triple-play service providing system, though the service operator will logically tend to give priority to the detection of anomalies that impact a large number of data processing devices, for the service user experiencing an isolated decrease of QoS, this is a very unsatisfying situation. That user has no other option than to try to contact the service operator. This is time-consuming and cumbersome; often, the user has to address himself to the service operator's call center. Once the troubled user is finally in contact with a call center telephone operator, a call center telephone operator will instruct the user to try different manipulations, such as return to factory settings and device reboot. If after a number of trials the user's service reception is still in error, a maintenance technician can intervene at the user's premises as a last resort. Such a procedure is very annoying for the user, which has to take himself the actions that will help to solve the problem that occurred. Service operators do not so much appreciate unsatisfied users. Though an individual problem can be considered minor from a technical point of view, individual problems have a larger scale dimension. Unsatisfied and frustrated users can destroy the reputation of the operator because it is in the human nature to convey a dissatisfying experience to other individuals, which are clients or potential clients of the service operator. Taking the second example of the large-scale data processing system being a distributed data storage system, a storage "node" or device can encounter local problems that are caused by storage media failure, power surge, CPU surcharge. This decreases its performance, or said otherwise, the quality of service (QoS) of the service it delivers, the service delivered by the storage device being a storage service.

For large-scale data processing systems, there is thus a need for a better solution for detection of isolated anomalies, that operates in an automatic manner, without resulting in overloading an anomaly management system in case of large-scale anomalies occurring and that does not rely on user intervention.

### 3. Summary of the invention.

The present invention aims at alleviating some of the inconveniences of prior art.

The invention proposes a method of isolated anomaly detection in a data processing device rendering a service, comprising a step implemented by the data processing device of first inserting the data processing device in a source quality bucket as a function of a quality of service of at least one service rendered by the data processing device, a quality bucket representing a group of data processing devices having a predefined range of quality of service for the at least one service; and a step of second inserting the data processing device in a destination quality bucket if the quality of service rendered by the data processing device evolves beyond the predefined range of the first quality bucket; and a step of sending a message representative of an isolated anomaly detection when a counter representing a total number of data processing devices in the destination quality bucket which source quality bucket is the same as the quality bucket of the data processing device is below a predetermined value.

According to a particular embodiment of the method of the invention, the method further comprises determining an address of a data processing device in the destination quality bucket that is in charge of storing the counter according to a hash function operated on the source quality bucket and on a timestamp of the second inserting, the timestamp representing a timeslot derived from a common clock shared between the data processing devices.

According to a particular embodiment of the method of the invention, the data processing device is organized in a network of data processing devices comprising root data processing devices that represent an entry point for a quality bucket, the second inserting further comprising transmitting a first request to a first root data processing device of its source quality bucket for obtaining an address of a destination root data processing device of its destination quality bucket.

According to a particular embodiment of the method of the invention, the method further comprises transmitting a second request to the destination root data processing device of its destination quality bucket for inserting the data processing device in the destination quality bucket.

According to a particular embodiment of the method of the invention, the network of data processing devices is organized according to a two-level overlay structure, comprising one top overlay that organizes network connections between the root data processing devices, and multiple bottom overlays that organizes network connections between data processing devices of a same quality bucket.

According to a particular embodiment of the method of the invention, the service rendered by the data processing device is a data storage service.

According to a particular embodiment of the method of the invention, the service rendered by the data processing device is an audio visual data rendering service.

The invention also relates to an isolated anomaly detection arrangement for a data processing device rendering a service, that comprises means for first inserting the data processing device in a source quality bucket as a function of a quality of service of at least one service rendered by the data processing device, a quality bucket representing a group of data processing devices having a predefined range of quality of service for the at least one service; means for second inserting the data processing device in a destination quality bucket if the quality of service rendered by the data processing device evolves beyond the predefined range of the first quality bucket; and means for sending a message representative of an isolated anomaly detection when a counter representing a total number of data processing devices in the destination quality bucket which source quality bucket is the same as the quality bucket of the data processing device is below a predetermined value.

According to a particular embodiment of the arrangement according to the invention, the arrangement further comprises means for determining an address of a data processing device in the destination quality bucket that is in charge of storing the counter according to a hash function operated on the source quality bucket and on a timestamp of the second inserting, the timestamp representing a timeslot derived from a common clock shared between the data processing devices.

According to a particular embodiment of the arrangement according to the invention, the data processing device is organized in a network of data processing devices comprising root data processing devices that represent an entry point for a quality bucket, the second inserting further comprising means for transmitting a first request to a first root data processing device of its source quality bucket for obtaining an address of a destination root data processing device of its destination quality bucket.

According to a particular embodiment of the arrangement according to the invention, the arrangement further comprises means for transmitting a second request to the destination root data processing device of its destination quality bucket for inserting the data processing device in the destination quality bucket.

According to a particular embodiment of the arrangement according to the invention, the network of data processing devices is organized according to a two-level overlay structure, comprising one top overlay that organizes network connections between the root data processing devices, and multiple bottom overlays that organizes network connections between data processing devices of a same quality bucket.

According to a particular embodiment of the arrangement according to the invention, the service rendered by the data processing device is a data storage service.

According to a particular embodiment of the arrangement according to the invention, the service rendered by the data processing device is an audio visual data rendering service.

### 4. List of figures.

More advantages of the invention will appear through the description of particular, non-restricting embodiments of the invention.

The embodiments will be described with reference to the following figures:
Figure 1 shows an example network topology of a large-scale data processing system and illustrates different cases where an isolated anomaly is detected or not.
Figure 2 illustrates the method of the invention.
Figure 3 illustrates an example of a two dimensional top overlay structure that can be used in the invention to monitor the quality of service of two services.
Figure 4 illustrates the hierarchy between a top overlay structure and the bottom overlays structure, which can be used in the present invention to increase the scalability of the provided solution, the structures allowing nodes or data processing devices to navigate efficiently when moving from one quality bucket to another.
Figure 5 shows an arrangement and device that can be used in a system that implements the method of the invention.
Figure 6 illustrates the method of the invention according to a particular embodiment in the form of a flow chart.

### 5. Detailed description of the invention.

In the present document, the term 'anomaly detection' is used rather than 'error detection'. This is done on purpose. Indeed, an anomaly is considered as an 'abnormal' change in QoS. Such an anomaly can either be positive (better QoS) or negative (worse QoS) and should thus be distinguished from 'error' or not. For anomaly monitoring purposes, besides error detection it can also be interesting to detect that a node has a better QoS, for example for troubleshooting purposes.

For data processing systems, communication complexity towards the anomaly management system is key to scalability. As has been discussed in the prior art section of this document, fine-grain anomaly detection is traded off against grouped anomaly detection in large-scale data processing systems, because the anomaly monitoring system is unable to handle anomaly messages from many devices at the same time. The invention therefore defines a solution for isolated anomaly detection that scales particularly well to use in large scale data processing systems where thousands or even millions of devices provide one or more data processing services. An important feature of the invention that is related to its scalability is its ability to minimize the raising of alarms upon detection of anomaly when devices encounter a significant degradation, or on the contrary, improvement in the QoS of the data processing service they provide. The objective of the current invention is to reduce alarm reporting to cases where the QoS degradation/improvement is assessed as being particular to the device, or to a limited set of devices. To this end, the invention proposes a self-organizing method of anomaly detection that is suited for any scale data processing system, including large or very large scale.

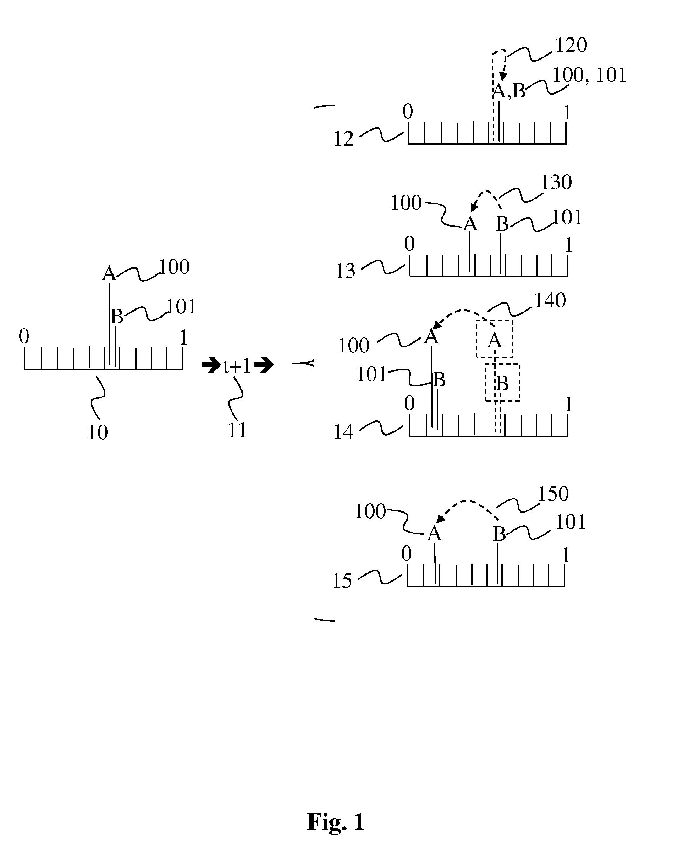

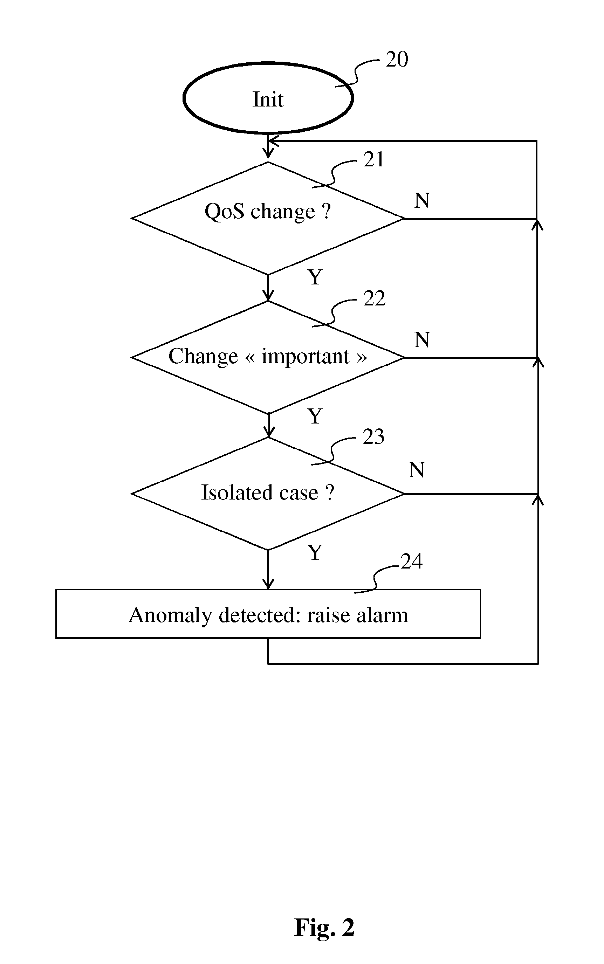

**Figure 1** shows an example network topology of a large-scale data processing system and illustrates different cases where an isolated anomaly is detected or not. If only one service (for example: one television reception service) is monitored for data processing system nodes (hereinafter 'nodes'), the possible QoS can be represented as a line with 'quality buckets', representing a number of predefined (here: 10) quality buckets for classifying QoS, from 0 (minimum quality) to 1 (maximum quality). Reference 10 represents such a classification for two nodes, A (100) and B (101). References 12-15 represent different scenarios of the evolution of the QoS for the nodes. At start, according to reference 10, nodes A and B, though not having exactly the same QoS, are in a same quality bucket. At t+1 (reference 11), (x+d as will be discussed further on) different changes in QoS occur for at least one of these nodes. According to scenario 12, node A experiences a slight change of QoS such that node A has the same QoS as node B. However, the change is not sufficient to make node A change to another quality bucket; the change stays inside the bucket bounds, and no further action is undertaken, i.e. no anomaly is detected. According to scenarios 13 to 15 however, node A experiences a QoS change that is sufficient for it to evolve to another quality bucket. However, according to the invention, one of the conditions to detect an anomaly is that an evolution should be sufficiently important, which is the case for scenarios 14 and 15, but not for scenario 13. According to scenario 13, no anomaly is thus detected. For scenarios 14 and 15, the evolution is sufficiently important but an isolated anomaly should only be detected if the evolution of the concerned node is an isolated case; otherwise, if many nodes experience the same evolution, the evolution is not isolated and will rather be due to a change occurring in the network or due to a massive system error, as for instance a buggy software update. In that case, one can assume that sufficient devices are experiencing the same anomaly so that the network operator is able to assess the problem with other means and does not need the fine grained mechanism we describe here. According to scenario 14, the evolution of node A is not an isolated case because node B has encountered the same evolution. For scenario 14, no anomaly is thus detected because more than a predetermined number (here: 2, as an example) of nodes encountered the same evolution, so that the anomaly is not considered as being isolated. However, according to scenario 15, only node A encountered the **sufficiently** important evolution of QoS. An anomaly is thus detected. The notion of 'sufficiently important' is according to a particular embodiment, implemented as a predefined threshold, see the explanation provided with Figure 2. According to a variant embodiment, a Holt-Winters forecasting method is used. If the Holt-Winters method is used, a list of the k last values of QoS is memorized per node. Using this list, a next value is predicted. If the real value is too far from the predicted value, an anomaly is detected. According to yet another variant embodiment, a Cusum method is used. Like Holt-Winters, a list of *k* last QoS values is memorized per node, but where Holt-Winters uses this list to predict a next value, Cusum detects trends in these values so that an anomaly is detected if the trend shows that there are a predefined number of QoS values that have a similar value of QoS as the previously discussed node A. Cusum is based on trends, whereas Holt-Winters detects a punctual change. These are example variant embodiments, which can be defined according to the desires of an operator.

**Figure 2** illustrates a particular embodiment of the method of the invention. An anomaly is detected (24) if a node leaves its quality bucket (21) and the evolution of distance between the QoS at t (or x as will be discussed further on) and t+1 (or x+d) is superior to a predetermined threshold (22), and if less than a predetermined number of nodes have encountered a same evolution (23). Alternatively, test steps 21 and 22 are combined in a single test step of determination if a QoS change is superior to a predetermined threshold.

Digital data processing technologies have the particularity to encounter thresholds under which data processing is no longer possible. In analogy with television technology, while a user of an analog TV receiver would still be able to continue to watch a television programme from an analog signal that comprises a large amount of noise, a digital TV receiver is not capable of rendering an image if the amount of noise in the digital signal is important; there is a threshold below which the digital signal reception is no longer possible. This factor can be taken into account when determining if an evolution of QoS is important or not and detect an anomaly. For example, if an evolution of QoS from 0.6 to 0.4 is acceptable because even with a QoS of 0.4 the receiver is still capable of correcting the errors occurring when reading the digital signal (for example, through application of an error correction method), an evolution of 0.4 to 0.3 would not be acceptable because the receiver is no longer capable of exploiting the digital signal below a QoS of 0.4. This knowledge can also be used to define the distribution of the quality buckets. According to the above example, a single quality bucket can be defined for QoS range 0 to 0.4 and another for QoS range 0.4 to 0.6. The distribution of the quality buckets is thus not necessarily regular. According to a variant embodiment, the method is thus adapted so that an additional OR condition is added: an anomaly is detected if a node leaves its quality bucket and the evolution of distance between the QoS at t (or x) and t+1 (or x+d) is superior to a predetermined threshold OR the node leaves its quality bucket and evolves to a quality bucket that is representative of a value of QoS that is below a predetermined threshold, and if less than a predetermined number of nodes have encountered a same evolution. The predetermined threshold can be set to a value below which error-less reception is no longer possible, or to a value below which reception is no longer possible.

According to the example of figure 1, only one service is monitored. In practice, more than one service can be monitored (for example, two or more television reception services; a television reception service and a telephony service). Rather than compiling the monitoring of multiple services into to a common result (for example using a mean function to calculate the average), which would result in a loss of information, the current invention allows to function with multi-dimensional quality buckets. While the principle of operation of the method is not changed, a quality bucket in D-dimensions merely requires the monitoring of multiple (D) services.

In order to avoid overloading a centralized anomaly detection server of the data processing system, the data processing devices according to the invention or nodes monitor themselves, locally, their QoS. The nodes organize themselves into groups of nodes, which have similar QoS. If a node observes a change of QoS that makes it change of quality bucket, and the change is determined to be important enough, the node changes from its current QoS group to another QoS group. In order to find out if the anomaly is isolated or not, the node contacts the other nodes in the 'new' QoS group, on their previous QoS. If the number of nodes in the new QoS group that had a same QoS is under a predetermined threshold, the node can consider that the anomaly that it encountered is local to the node, i.e. is isolated, and only then it transmits an alarm message to the centralized anomaly detection server. Up till the transmission of the alarm message, the centralized anomaly detection server was thus not contacted and there is no overload of messages transmission due to the isolated anomaly. Furthermore, the anomaly detection functions automatically, without user intervention.

As has been shown above, according to the method of the invention the nodes collaborate without the intervention of a centralized controller or server to figure out if an anomaly occurring at one node is isolated or not. According to an advantageous embodiment, the nodes are organized in a peer-to-peer (P2P) fashion. The P2P network topology adds the advantage to reduce communication bottlenecks, as the nodes can communicate between each other directly without using the services of a centralized controller or server to find each other's addresses and communicate with each other. This further adds to the scalable character of the invention. To this P2P network topology the invention adds two types of overlays: one top level overlay (where nodes are placed into a D-multidimensional space), allowing a global communication between nodes, and one or many bottom-overlays, but at most one per quality bucket, that are in charge of connecting nodes with similar QoS.

As has been mentioned, a node that changes of quality bucket will have moved to another quality bucket, and then has to determine how many other nodes also made the same move in order to determine if the move is an isolated case, in which case an alarm can be raised. The node has thus to communicate with surrounding nodes to obtain information in which node group (destination group) it has to insert itself, then interrogate a certain location (node) within the destination group in order to know how many other nodes also made the same move. This requires some organization. A straight-forward embodiment is a centralized server that each node can contact and that assembles the required information. However, such a solution is not very scalable to large-scale data processing systems. A better solution is to use an overlay architecture where some nodes play the role of link nodes to sets of other nodes. For nodes to easily find node addresses without needing the use of a centralized server, a DHT (Distributed Hash Table) is used. DHT is a class of a decentralized distributed system that provides a lookup service similar to a hash table; (*key, value*) pairs are stored in a DHT, and any participating node can efficiently retrieve the value associated with a given key. Responsibility for maintaining the mapping from keys to values is distributed among the nodes, in such a way that a change in the set of participants causes a minimal amount of disruption. This allows a DHT to scale to extremely large numbers of nodes and to handle continuous node arrivals and departures. Such a DHT provides basic PUT and GET operations to respectively store and retrieve items in a distributed manner among participating nodes. According to a particular embodiment of the invention using a DHT, a distributed hash table exports a basic interface providing PUT and GET operations, allowing to map (key; value) pairs to nodes participating in the system. Nodes can then insert values in the DHT with a PUT operation, and retrieve values using GET associated with a key. Keys are obtained by hashing an object's content (or name), in order to obtain a random address on the DHT's address space. Nodes are themselves responsible for storing objects which keys fall into their subset of the DHT's address space, based on their position in the DHT (depending on their ID in the same space).

A particularly efficient overlay architecture according to the invention that allows nodes to communicate efficiently in a large-scale data processing system uses the mentioned two-level P2P network topology, i.e. one or many 'bottom' and exactly one 'top' overlay structures. A particular overlay structure at the bottom overlay layer allows nodes having close QoS values to be closely connected in a scalable manner; each node only knows a subset of other nodes in that given group, so that communication is not propagated to all nodes. According to a particular embodiment of the invention, the bottom overlay is implemented as a hypercube. According to a variant embodiment, the bottom overlay is implemented as a Plaxton tree implementation as with Chord or Pastry. The top overlay allows fast communication between node groups. In the top overlay, nodes self organize themselves into quality buckets according to their QoS values. The bottom overlay is used to avoid each node to communicate to all other nodes. In the bottom overlay, nodes self organize themselves independently of the QoS values. There is a bottom overlay per quality bucket, the quality buckets being interconnected via the top overlay; a bottom overlay being a hypercube, a Plaxton tree, or other. For a bottom overlay, a classical DHT function is used that allows nodes in a same quality of service bucket to find each other's addresses based on a hash value and communicate efficiently without passing through a great number of nodes. However efficient a 'standard' DHT is for structuring the bottom overlays, for the top level overlay, a particular version of a DHT is better suited for the purpose of the invention; in order to be able to handle a D-dimensional metric, the method of the invention can monitor D services simultaneously. The main difference between a 'standard' DHT and the particular DHT variant according to the invention used for the top overlay is that according to the 'standard' DHT, a hash value is associated to a position in the overlay. But the hashing operation results in uniform distribution of the nodes into space, which would result in loss of the information that requires that nodes are distributed into space according to their QoS. According to the invention, nodes are thus interconnected to close nodes with respect to their respective QoS values; the system then respects the original QoS distribution when considering proximity of nodes in the top level overlay. For instance, when a node observes its QoS value to change at a point that it needs to move to another quality bucket, it will send a message that will be routed according to the D-values of its monitored services; this message will eventually reach the quality bucket where this D-values coordinate belongs, and then that node will be able to a execute a move from its past (source) position in the overlay to this new (destination) position by interacting with nodes in that distant and new quality bucket where the message has finally arrived.

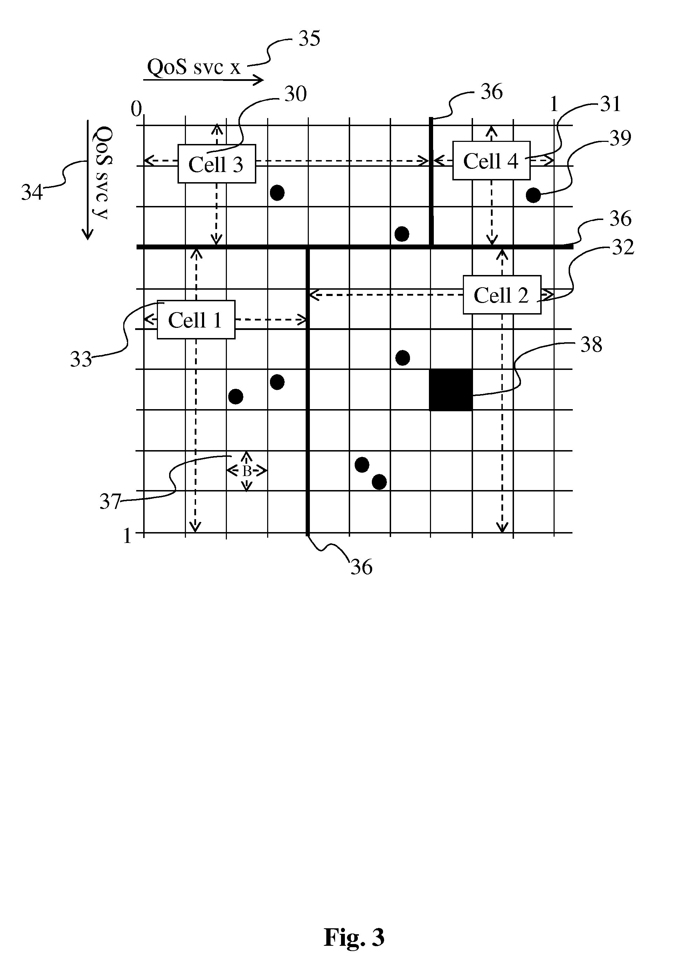

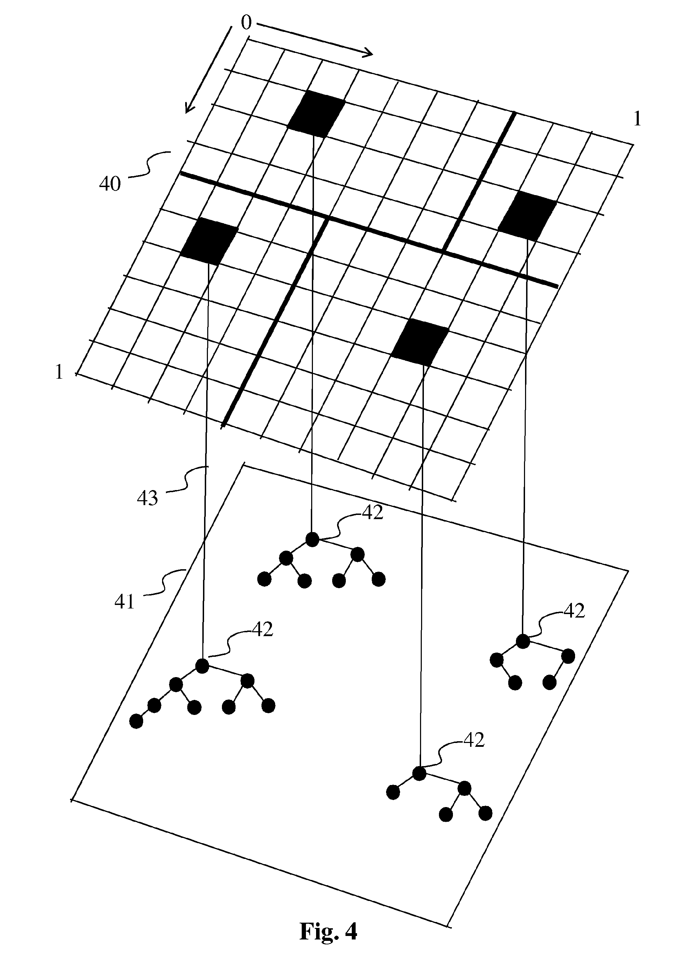

The top overlay thus allows efficient, short path navigation ('routing') between node groups, which is desirable when a node changes quality bucket, and therefore has to route to the accurate new quality bucket, where it finds the group of nodes with values closer to its new QoS (i.e. the bottom overlay). Therefore, in the top overlay, as mentioned, nodes are organized according to their quality bucket instead of according to their hash value. Figures 3 and 4 allow for better understanding of these different notions; fig. 3 represents a CAN-like DHT (Content Addressable Network), handling a D-dimensional space corresponding to D monitored services (D=2 in figs. 3 and 4). CAN is a distributed, decentralized P2P infrastructure that provides hash table functionality on an Internet-like scale.

An example of a two-dimensional top overlay structure (D=2) is illustrated by means of **Figure 3**. D is the number of services that are to be monitored for establishing of the QoS: horizontally, QoS of service x (reference 35); and vertically, QoS of service y (34). The D-dimensional space is divided into quality buckets. The quality buckets are grouped into cells (here, 1 to 4, references 30-33) that group quality buckets with a specific range of QoS. Each cell has at most one seed (here, blackened quality bucket 38). Nodes (blackened dots, reference 39) are placed into the grid according to their QoS. A seed (38) is a quality bucket that contains a number of nodes (39, illustrates an individual node in a quality bucket) that is above a predetermined threshold. This threshold is not related to the previously discussed predetermined threshold that is used in a described particular embodiment of the invention for determination if an anomaly is isolated or not.

**Figure 4** illustrates the hierarchy between the top overlay 40 and the one or many bottom overlays 41 (here: four bottom overlays are illustrated here as a non-limiting example). In the top overlay, nodes are organized in quality buckets according to their coordinates in the grid. In the bottom overlay, groups of nodes having a same or similar quality of service are organized by a DHT. For the sake of clarity of illustration, a simple tree structure is drawn for each of the four bottom level overlays. The link between the top overlay and the bottom overlays is represented by line 43 that illustrates a 'root' node being a bridge between a bottom overlay and the top overlay, the root node representing the entry point to the bottom overlay of a quality bucket.

When a node changes quality bucket, i.e. it 'moves' to another quality bucket, it does a lookup of the root node (reference 42) in its bottom overlay, using the DHT. The ('moving' node can for instance route to DHT node responsible for ID 0 in the DHT. According to a variant embodiment, load balancing mechanism is used). Having found the root node (42), the moving node requests the root node to find the address of a root node in the top overlay according to the quality bucket coordinates of its destination quality bucket via a lookup operation in the top overlay. It then uses the root node as a bootstrap node to be inserted in the topology of the destination bottom overlay. Once inserted in the destination bottom overlay, newly joined node can communicate with nodes in that bottom overlay through classical DHT primitives. In order to decide whether or not to send an alert message to the central server, the newly joined node needs to know the number of nodes that have made the same move. To do so, the moving node increases a counter of the number of nodes that have made the same move in its bottom overlay. This counter is used to count the number of nodes coming from the same quality bucket (source bucket) into the current one (destination bucket) at approximately the same time. The nodes share a common time clock t, from which timestamps are generated that define time slots derived from the common clock that have a predetermined duration d, where d is a parameter defined for the data processing system that implements the invention. A node that has determined a change of quality bucket at timeslot x, checks at time *x+d (x+d meaning the next time slot),* the value of this counter. If the counter is below or less than a predetermined threshold value, an alert is raised. Otherwise, the node remains silent. The common time line, that can for example be shared by a common clock shared between the nodes, and the predetermined duration of timeslots ensures that the operations are synchronized on the time line per time slot, which is important for calculating the hash operation hash(previous_location:time_of_move_relative_to_time_slot) that will be discussed further on.

The location of the counter in each bottom overlay (i.e. a particular node in charge of hosting the counter value) is defined to be determined by the DHT hashing of the previous location of the moving node, and of the time when it moves (considering a predefined timeslot duration d of a few minutes for instance). In other words, an operation of type hash(previous_location:time_of_move_relative_to_time_slot) will provide a deterministic value, i.e. a timestamp, used by moving nodes to uniquely identify the location of the counter in the given DHT. In this way, a new location is defined for each couple of past location / time stamp of the move time slot in each bottom overlay, which provides load balancing across nodes constituting the bottom overlays.

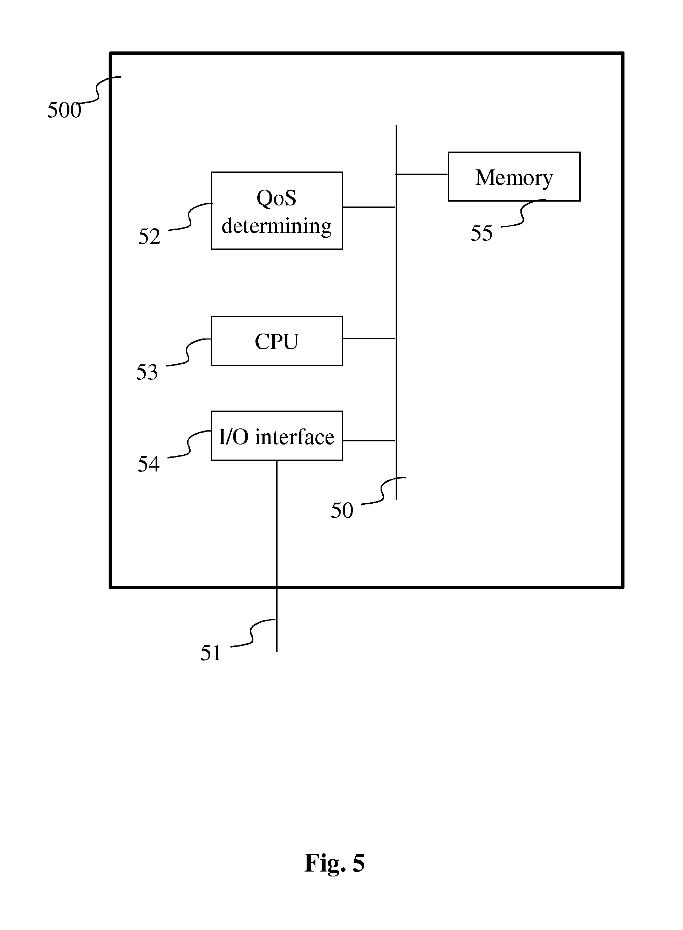

**Figure 5** shows a device 500 that can be used in a system that implements the method of the invention. The device comprises the following components, interconnected by a digital data- and address bus 50:
- a processing unit 53 (or CPU for Central Processing Unit);
- a memory 55 ;
- a network interface 54, for interconnection of device 500 to other devices connected in a network via connection 51.

Processing unit 53 can be implemented as a microprocessor, a custom chip, a dedicated (micro-) controller, and so on. Memory 55 can be implemented in any form of volatile and/or non-volatile memory, such as a RAM (Random Access Memory), hard disk drive, non-volatile random-access memory, EPROM (Erasable Programmable ROM), and so on. Device 500 is suited for implementing a data processing device according to the method of the invention. The data processing device 500 has means for insertion (53, 54) into a first group of data processing devices that have a same first quality of service value related to at least one service provided by the data processing device; quality of service evolution determining means (52) for determining if the quality of service value of the data processing device evolves to a second quality of service value that is beyond a predetermined threshold, and means for insertion (53, 54) into a second group of data processing devices that have a same quality of service; calculation means (53) for determining if the second group of data processing devices comprises a number of data processing devices that had a previous quality of service value that is equal to the first value and the number is below a predetermined value, and means for transmission (54) of a message indicating an isolated anomaly detection.

According to a particular embodiment, the invention is entirely implemented in hardware, for example as a dedicated component (for example as an ASIC, FPGA or VLSI) (respectively « Application Specific Integrated Circuit », « Field-Programmable Gate Array and « Very Large Scale Integration ») or according to another variant embodiment, as distinct electronic components integrated in a device or, according to yet another embodiment, in a form of a mix of hardware and software.

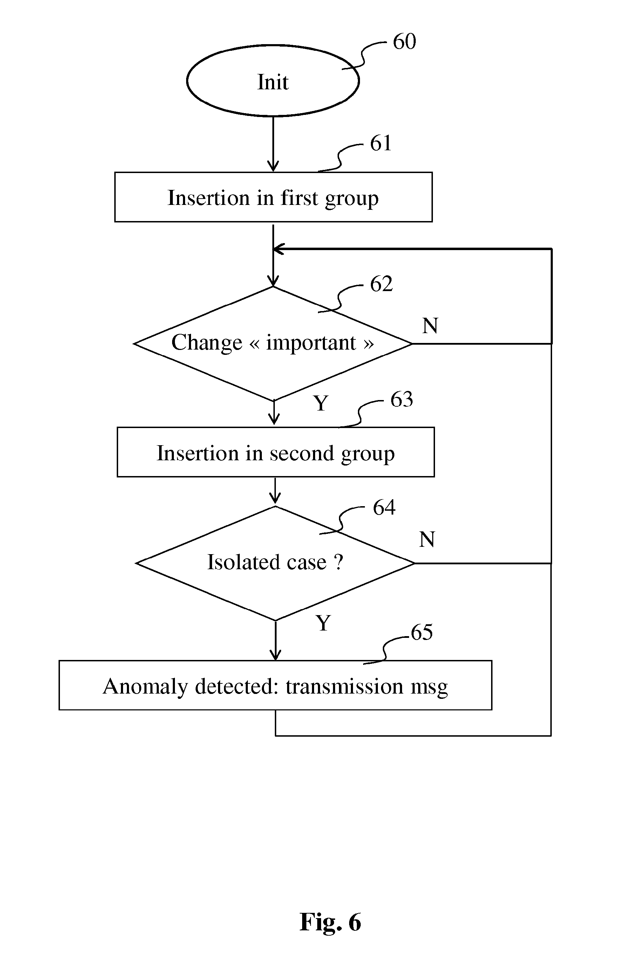

**Figure 6** illustrates the method of the invention according to a particular embodiment in the form of a flow chart. In a first step 60 of initialization, variables are initialized in memory, for example memory 55 of device 500, that are needed for the execution of the method. In a next step 61, the device inserts itself into a quality bucket (the 'source' quality bucket) as a function of a quality of service of at least one service rendered by the data processing device. A quality bucket represents a group of data processing devices that have a predefined range of quality of service for the at least one service. Put otherwise, the device inserts itself into a quality bucket having a range of quality of service that comprises the quality of service of the of the at least one service rendered by the data processing device. 'insertion' into a quality bucket means that the device becomes a member of the group the represents the quality bucket. According to a particular embodiment, such insertion is done by adding an identifier representing the device into a list of a group of devices that represent a quality bucket. According to a variant embodiment, the insertion is done by creating a network connection to the set of devices that represent the quality bucket, the quality bucket being characterized by the network connections between the devices that are in the quality bucket. In a decisional step 62, it is determined if the quality of service rendered by the data processing device evolves beyond the predefined range of the quality bucket into which it is inserted (of which it is a member). This means that between the quality of service at a given instant in time that was comprised in the range of its quality bucket and a quality of service at a later instant of time, the latter is no more inside the range of its quality bucket, i.e. the evolution of the QoS is sufficiently important to result in a change of quality bucket; i.e. from the 'source' to a 'destination' quality bucket. The device is thus to be inserted in another quality bucket in a second inserting step (63) of inserting the data processing device in a destination quality bucket if the quality of service rendered by the data processing device evolves beyond the predefined range of the first quality bucket. Then, it is determined in a step 64 if the change of quality bucket was an isolated case. For this, it is determined if a counter representing a total number of data processing devices in the destination quality bucket which source quality bucket is the same as the quality bucket of the data processing device is below a predetermined value. If so, an isolated anomaly is detected, and the device transmits/sends a message that is representative of the occurrence of an isolated anomaly detection. According to a particular embodiment, the message comprises an identifier of the device. According to a variant embodiment, the message comprises the reason for the anomaly detection, so that the operator can intervene without interrogating the device for the anomaly reason.

## Claims

1. A method of isolated anomaly detection in a data processing device rendering a service, **characterized in that** said method comprises the following steps, implemented by said data processing device:
first inserting (61) said data processing device in a source quality bucket as a function of a quality of service of at least one service rendered by said data processing device, a quality bucket representing a group of data processing devices having a predefined range of quality of service for said at least one service;
second inserting (63) said data processing device in a destination quality bucket if said quality of service rendered by said data processing device evolves beyond said predefined range of the first quality bucket;
sending (65) a message representative of an isolated anomaly detection when a counter representing a total number of data processing devices in said destination quality bucket which source quality bucket is the same as the quality bucket of said data processing device is below a predetermined value (64).

2. The method according to Claim 1, wherein the method further comprises determining an address of a data processing device in said destination quality bucket that is in charge of storing said counter according to a hash function operated on the source quality bucket and on a timestamp of said second inserting, said timestamp representing a timeslot derived from a common clock shared between said data processing devices.

3. The method according to Claim 1 or 2, wherein the data processing device is organized in a network of data processing devices comprising root data processing devices that represent an entry point for a quality bucket, the second inserting further comprising transmitting a first request to a first root data processing device of its source quality bucket for obtaining an address of a destination root data processing device of its destination quality bucket.

4. The method according to Claim 3, wherein the method further comprises transmitting a second request to said destination root data processing device of its destination quality bucket for inserting said data processing device in said destination quality bucket.

5. The method according to Claim 3 or 4, wherein said network of data processing devices is organized according to a two-level overlay structure, comprising one top overlay that organizes network connections between said root data processing devices, and multiple bottom overlays that organizes network connections between data processing devices of a same quality bucket.

6. The method according to any of Claims 1 to 5, wherein the service rendered by the data processing device is a data storage service.

7. The method according to any of Claims 1 to 5, wherein the service rendered by the data processing device is an audio visual data rendering service.

8. An isolated anomaly detection arrangement for a data processing device rendering a service, **characterized in that** it comprises:
means for first inserting said data processing device in a source quality bucket as a function of a quality of service of at least one service rendered by said data processing device, a quality bucket representing a group of data processing devices having a predefined range of quality of service for said at least one service;
means for second inserting said data processing device in a destination quality bucket if said quality of service rendered by said data processing device evolves beyond said predefined range of the first quality bucket;
means for sending a message representative of an isolated anomaly detection when a counter representing a total number of data processing devices in said destination quality bucket which source quality bucket is the same as the quality bucket of said data processing device is below a predetermined value.

9. The arrangement according to Claim 8, further comprising means for determining an address of a data processing device in said destination quality bucket that is in charge of storing said counter according to a hash function operated on the source quality bucket and on a timestamp of said second inserting, said timestamp representing a timeslot derived from a common clock shared between said data processing devices.

10. The arrangement according to Claim 8 or 9, wherein the data processing device is organized in a network of data processing devices comprising root data processing devices that represent an entry point for a quality bucket, the second inserting further comprising means for transmitting a first request to a first root data processing device of its source quality bucket for obtaining an address of a destination root data processing device of its destination quality bucket.

11. The arrangement according to Claim 10, further comprising means for transmitting a second request to said destination root data processing device of its destination quality bucket for inserting said data processing device in said destination quality bucket.

12. The arrangement according to Claim 10 or 11, wherein said network of data processing devices is organized according to a two-level overlay structure, comprising one top overlay that organizes network connections between said root data processing devices, and multiple bottom overlays that organizes network connections between data processing devices of a same quality bucket.

13. The method according to any of Claims 8 to 12, wherein the service rendered by the data processing device is a data storage service.

14. The method according to any of Claims 8 to 12, wherein the service rendered by the data processing device is an audio visual data rendering service.
